# FASCICULE DE BREVET EUROPEEN

(11) **EP 4 476 112 B1**
(45) Date de publication et mention de la délivrance du brevet: **02.09.2026**
(21) Numéro de dépôt: 23700836.2
(22) Date de dépôt: 13.01.2023
(51) Int. Cl.: B60W 50/06, B60W 30/18, B60W 10/20, B60W 60/00, B62D 6/00

(54) **PROCÉDÉ, DISPOSITIF ET PROGRAMME D'ORDINATEUR DE GUIDAGE D'UN VÉHICULE AUTOMOBILE**
VERFAHREN, VORRICHTUNG UND COMPUTERPROGRAMM ZUM FÜHREN EINES KRAFTFAHRZEUGS
METHOD, APPARATS AND COMPUTER PROGRAM FOR GUIDING A MOTOR VEHICLE

(30) Priorité: 09.02.2022 FR 2201136
(43) Date de publication de la demande: 18.12.2024
(73) Titulaire: Ampere SAS, 92100 Boulogne-Billancourt (FR)
(72) Inventeur: KAPSALIS, Dimitrios, 78084 Guyancourt Cedex (FR); MARTINEZ, John-Jairo, 38000 Grenoble (FR); MILANES, Vincente, 46007 Valladolid (ES); SENAME, Olivier, 38402 Saint Martin d'Hères (FR)
(74) Mandataire: Renault Group
(86) Numéro de dépôt international: PCT/EP2023/050780
(87) Numéro de publication internationale: WO 2023/151892

(56) Documents cités:
- WO-A1-2021/228657
- US-A1- 2015 161 895
- US-A1- 2016 107 682
- US-A1- 2018 297 638
- YANG YANG WANG ET AL: "Study on Lane Change Trajectory Planning Considering of Driver Characteristics", SAE 2010 COMMERCIAL VEHICLE ENGINEERING CONGRESS SAE TECHNICAL PAPERS, vol. 1, 7 August 2018 (2018-08-07), US, XP055696474, ISSN: 0148-7191, DOI: 10.4271/2018-01-1627

## Description

L'invention concerne un procédé de guidage d'un véhicule automobile. L'invention porte encore sur un dispositif de guidage d'un véhicule automobile. L'invention porte également sur un programme d'ordinateur mettant en œuvre un des procédés mentionnés. L'invention porte enfin sur un support d'enregistrement sur lequel est enregistré un tel programme.

Le guidage latéral des véhicules automobiles comprend notamment l'automatisation de manœuvres de changement de voie de circulation. Les solutions de contrôle existantes pour les manœuvres de changement de voie privilégient généralement le confort de la manœuvre à la vitesse de convergence vers la voie ciblée. Pour cela, ces solutions reposent principalement sur des techniques de contrôle latéral automatique qui limitent les capacités du système de direction assistée électrique du véhicule, notamment la vitesse de rotation du volant du véhicule.

Cependant, lorsque la distance latérale entre la voie de circulation du véhicule et sa voie de destination est importante, la limitation de la vitesse de rotation du volant du véhicule automobile peut entrainer des défaillances du guidage latéral (comme une déviation de la trajectoire du véhicule par rapport à la trajectoire calculée ou même une sortie des limites de la voie de destination).

On connaît du document US8855883B2 un procédé d'assistance au changement de voie impliquant le conducteur du véhicule, qui garde le contrôle principal du volant. Outre le fait qu'il ne s'applique pas au véhicule autonome, ce procédé d'assistance n'optimise pas la manœuvre de changement de voie par rapport aux capacités du système de direction assistée électrique du véhicule et ne permet pas de minimiser la durée de la manœuvre.

On connait également l'article de Yang Yang Wang et al. : "Study on line change trajectory planning considering of driver characteristics", SAE 2010 commercial vehicle engineering congress SAE technical papers, vol. 1, dans lequel le dépassement suit une courbe sinusoïdale en tenant compte des risques de collisions avec le véhicule à dépasser et des préférences du conducteur, sans chercher à minimiser la durée de manœuvre. On connait également la demande de brevet US 2015/0161895 A1, dans laquelle la vitesse de lacet du véhicule est directement liée au temps disponible pour le dépassement.

Le but de l'invention est de fournir un dispositif et un procédé de guidage remédiant aux inconvénients ci-dessus et améliorant les dispositifs et procédés de guidage connus de l'art antérieur. En particulier, l'invention permet de réaliser un dispositif et un procédé qui soient simples et fiables et qui s'appliquent au véhicule autonome, qui optimisent la manœuvre de changement de voie par rapport aux capacités de la direction assistée et qui minimisent la durée de la manœuvre de changement de voie.

A cet effet, l'invention porte sur un procédé de guidage d'un véhicule automobile équipé d'un capteur de vitesse, d'un gyroscope, d'un moyen de géolocalisation, d'un système de planification de trajectoire, d'un module de contrôle de déplacement latéral, d'un système de direction et de roues,
- le système de direction limitant une valeur absolue d'une vitesse de lacet du véhicule automobile à une vitesse de lacet maximale,
- un taux de variation de la vitesse de lacet étant compris entre une valeur minimale et une valeur maximale,
- le taux de variation de la vitesse de lacet variant selon un pas de réglage fixe.

Le procédé comprend une itération des étapes suivantes :
- une première étape de sélection d'un taux de variation de la vitesse de lacet,
- une deuxième étape de maximisation d'une vitesse de lacet de référence virtuelle en fonction du taux de variation de la vitesse de lacet et de la vitesse de lacet maximale,
- une troisième étape de transmission de la vitesse de lacet de référence virtuelle au module de contrôle de déplacement latéral.

Dans un mode de réalisation, le procédé de guidage comprend, suite à la troisième étape,
- une quatrième étape de génération par le module de contrôle de déplacement latéral d'une première commande de direction à partir de la vitesse de lacet de référence virtuelle, et
- une cinquième étape de transformation par le système de direction de la première commande de direction en une seconde commande de direction consistant en un mouvement d'un arbre de direction relié aux roues directrices.

La première étape peut comprendre :
- une première sous-étape de réception d'une première commande de direction émise par le module de contrôle de déplacement latéral lors d'une précédente itération du procédé,
- une deuxième sous-étape de réception d'une seconde commande de direction appliquée par le système de direction lors de ladite précédente itération du procédé, et
- une troisième sous-étape de calcul du taux de variation de la vitesse de lacet en fonction d'un précédent taux de variation de la vitesse de lacet calculé lors de la précédente itération du procédé, de la valeur minimale du taux de variation de la vitesse de lacet, de la valeur maximale du taux de variation de la vitesse de lacet, du pas de réglage fixe et d'une différence entre la première et la seconde commandes de direction.

La troisième sous-étape de calcul du taux de variation de la vitesse de lacet peut comprendre :
- une comparaison de la première commande de direction et de la seconde commande de direction émises lors d'une précédente itération du procédé, et
- une comparaison du précédent taux de variation de la vitesse de lacet à la valeur minimale du taux de variation de la vitesse de lacet.
   Puis,
- si la première commande de direction est différente de la seconde commande de direction, et si le précédent taux de variation de la vitesse de lacet est supérieur à la valeur minimale, alors le taux de variation de la vitesse de lacet est égal à la différence entre le précédent taux de variation de la vitesse de lacet et le pas de réglage fixe, sinon
- si la première commande de direction est égale à la seconde commande de direction, et si le précédent taux de variation de la vitesse de lacet est inférieur à la valeur maximale, alors le taux de variation de la vitesse de lacet est égal à la somme du précédent taux de variation de la vitesse de lacet et du pas de réglage fixe, sinon
- le taux de variation de la vitesse de lacet est égal au précédent taux de variation de la vitesse de lacet.

Dans un mode de réalisation, le système de direction est apte à traiter des commandes issues du module de contrôle de déplacement latéral à une fréquence inférieure ou égale à une fréquence de traitement maximale, et l'étape de maximisation de la vitesse de lacet de référence virtuelle comprend :
- une modélisation d'un système continu en boucle fermée comprenant un modèle d'état continu du véhicule automobile et un modèle continu du module de contrôle de déplacement latéral,
- une définition d'un système discrétisé en boucle fermé par discrétisation du modèle du système continu en boucle fermée à une fréquence inférieure ou égale à la fréquence de traitement maximale,
- une détermination de la vitesse de lacet de référence virtuelle par un calcul d'optimisation, notamment de maximisation de cette vitesse.

L'invention porte en outre sur un dispositif de guidage d'un véhicule automobile, le véhicule automobile étant équipé d'un capteur de vitesse, d'un gyroscope, d'un moyen de géolocalisation, d'un système de planification de trajectoire d'un module de contrôle de déplacement latéral, d'un système de direction et de roues directrices. Le dispositif comprend des éléments matériels et/ou logiciels mettant en œuvre le procédé tel que défini précédemment.

L'invention porte également sur un produit programme d'ordinateur comprenant des instructions de code de programme enregistrées sur un support lisible par ordinateur pour mettre en œuvre les étapes du procédé tel que défini précédemment lorsque ledit programme fonctionne sur un ordinateur. L'invention porte également sur un produit programme d'ordinateur téléchargeable depuis un réseau de communication et/ou enregistré sur un support de données lisible par un ordinateur et/ou exécutable par un ordinateur, comprenant des instructions qui, lorsque le programme est exécuté par l'ordinateur, conduisent celui-ci à mettre en œuvre le procédé tel que défini précédemment.

L'invention porte encore sur un support d'enregistrement de données, lisible par un ordinateur, sur lequel est enregistré un programme d'ordinateur comprenant des instructions de code de programme de mise en œuvre du procédé tel que défini précédemment. L'invention porte encore sur un support d'enregistrement lisible par ordinateur comprenant des instructions qui, lorsqu'elles sont exécutées par un ordinateur, conduisent celui-ci à mettre en œuvre le procédé tel que défini précédemment.

L'invention porte encore sur un signal d'un support de données, portant le produit programme d'ordinateur tel que défini précédemment.

Les dessins annexés représentent, à titre d'exemple, un mode de réalisation d'un dispositif de guidage selon l'invention et un mode d'exécution d'un procédé de guidage selon l'invention.
La figure 1 représente un véhicule automobile équipé d'un dispositif de guidage selon l'invention.
La figure 2 définit des vitesses longitudinale, latérale et de lacet du véhicule automobile.
La figure 3 est une représentation alternative d'un véhicule automobile équipé d'un dispositif de guidage selon l'invention.
La figure 4 représente une architecture fonctionnelle d'un dispositif de guidage selon l'invention.
La figure 5 est un ordinogramme d'un procédé de guidage selon l'invention.
La figure 6 illustre un algorithme de sélection d'un taux de variation d'une vitesse de lacet du véhicule automobile.
La figure 7 illustre une première simulation d'un changement de voie rapide d'un premier véhicule non équipé d'un dispositif de guidage selon l'invention.
La figure 8 illustre une deuxième simulation d'un changement de voie rapide d'un deuxième véhicule équipé d'un premier mode de réalisation d'un dispositif de guidage selon l'invention.
La figure 9 illustre une troisième simulation d'un changement de voie rapide d'un troisième véhicule équipé d'un deuxième mode de réalisation d'un dispositif de guidage selon l'invention.

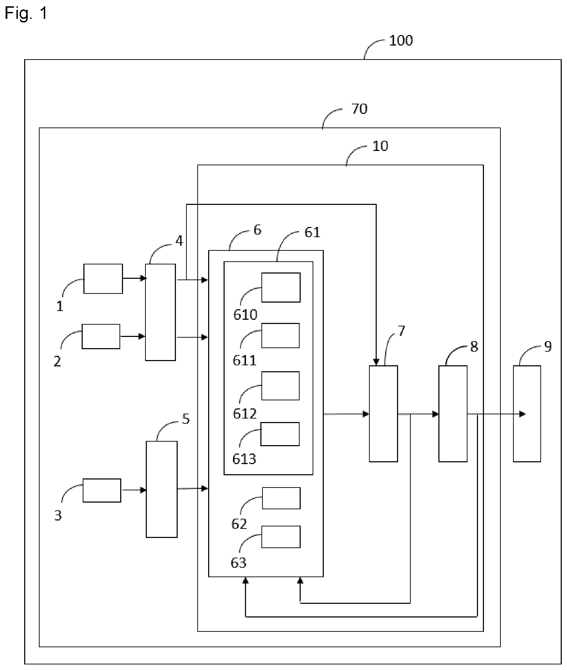

Un exemple d'un véhicule automobile 100 équipé d'un mode de réalisation d'un dispositif de guidage d'un véhicule automobile est décrit ci-après en référence à la figure 1.

Le véhicule automobile 100 peut être un véhicule automobile de n'importe quel type, notamment un véhicule de tourisme, un véhicule utilitaire, un camion ou encore un véhicule de transport en commun tel qu'un bus ou une navette. Selon le mode de réalisation décrit, le véhicule automobile 100 est un véhicule autonome et sera désigné "véhicule autonome" dans la suite de la description.

Cette illustration est donc faite à titre non limitatif. Notamment le véhicule automobile pourrait être un véhicule non autonome, équipé d'un système d'aide à la conduite, notamment un système d'aide à la conduite correspondant à un niveau supérieur ou égal au niveau 2 d'autonomie, c'est-à-dire correspondant à une autonomie partielle du véhicule.

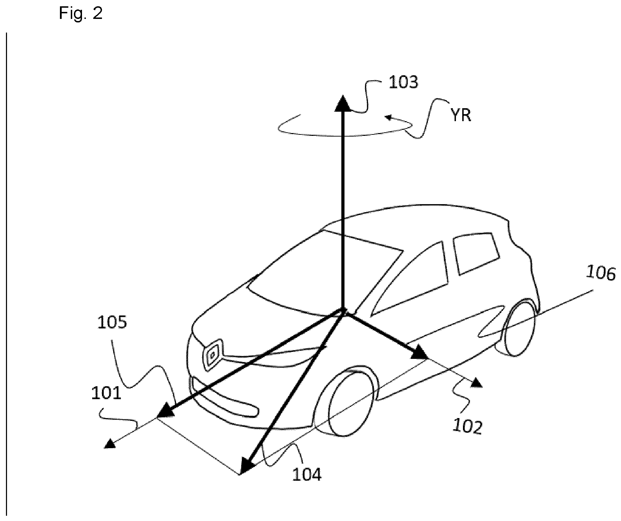

En référence à la figure 2, on définit les vitesses relatives au véhicule autonome 100 utilisées dans la suite du document.

L'axe dit axe longitudinal 101 du véhicule ego est défini comme son axe de symétrie longitudinal, orienté vers l'avant du véhicule.

L'axe dit axe latéral 102 du véhicule ego coupe perpendiculairement l'axe longitudinal 101 en un point situé au centre de gravité du véhicule ego, et il est orienté vers la gauche du véhicule ego.

L'axe dit axe vertical 103 du véhicule ego coupe perpendiculairement un plan défini par les axes 101 et 102 en un point situé au centre de gravité du véhicule ego, et il est orienté vers le haut du véhicule ego.

Le vecteur vitesse 104 du véhicule ego en projection sur l'axe longitudinal 101 définit la composante longitudinale 105 du vecteur vitesse, dite vitesse longitudinale.

Le vecteur vitesse 104 du véhicule ego en projection sur l'axe latéral 102 définit la composante latérale 106 du vecteur vitesse, nommée dans la suite du document vitesse latérale LAT_SPEED.

La vitesse de lacet YR du véhicule autonome 100 est définie comme vitesse de rotation du véhicule autour de l'axe vertical 103 dans le sens de rotation direct du repère défini par les axes 101 et 102.

Le véhicule autonome 100 comprend un système de guidage 70 qui commande un angle de braquage de roues directrices 9 du véhicule.

Dans la suite du document, le terme « roue » est utilisé pour désigner les roues directrices du véhicule autonome 100.

Le système de guidage 70 comprend principalement les éléments suivants :
- un capteur de vitesse 1,
- un gyroscope 2,
- un système de géolocalisation 3,
- un module de planification de trajectoire 4, nommé « module de planification 4 » dans la suite du document,
- un modèle 5 d'estimation de la dynamique latérale du véhicule autonome 100, nommé « modèle d'estimation 5 » dans la suite du document,
- un module de contrôle de déplacement latéral 7, nommé « module de contrôle 7 » ou « contrôleur » dans la suite du document,
- un système de direction 8 incluant un actionneur, notamment un actionneur électrique, et
- une unité de calcul 6 comprenant un microprocesseur 61, une mémoire 62 et des interfaces de communication 63 permettant au microprocesseur 61 de communiquer avec le module de planification 4, le modèle d'estimation 5, le module de contrôle 7 et le système de direction 8.

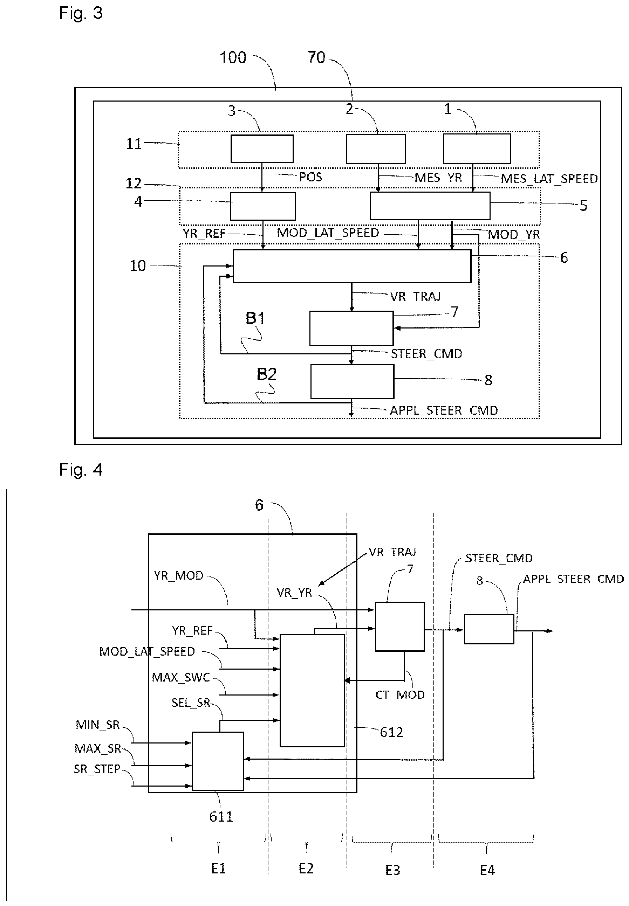

Le système de guidage 70 ainsi que les interactions entre les éléments qui le composent sont plus spécifiquement décrits en référence aux figures 3 et 4.

La figure 3 décrit une répartition des éléments du système de guidage 70 en trois couches de traitement :
- une première couche de mesure, comprenant le capteur de vitesse 1, le gyroscope 2, et le système de géolocalisation 3,
- une deuxième couche de traitement de données, comprenant le module de planification 4 et le modèle d'estimation 5,
- une troisième couche consistant en un système de contrôle de changement de voie 10, qui comprend le microprocesseur 6, le module de contrôle 7 et le système de direction 8.

Le capteur de vitesse 1 fournit une mesure la vitesse instantanée MES_SPEED du véhicule autonome 100, notamment une mesure de la vitesse latérale MES_LAT_SPEED du véhicule autonome 100.

Le gyroscope 2 permet de mesurer la vitesse de lacet instantanée MES_YR du véhicule autonome 100.

Le système de géolocalisation 3 permet de déterminer la position géographique POS du véhicule autonome 100 sur une carte. Dans un mode de réalisation, le système de géolocalisation 3 est un système GPS.

Le module de planification 4 détermine une trajectoire de référence REF_TRAJ du véhicule autonome 100, à partir de la position instantanée POS issue du système de géolocalisation 3. La trajectoire de référence REF_TRAJ est la trajectoire utilisée pour générer des commandes de déplacement, en fonction des paramètres cinématiques courants du véhicule autonome 100, et d'un itinéraire planifié. Avantageusement, la trajectoire de référence REF_TRAJ est déterminée selon des décisions opérationnelles et/ou tactiques prises par le véhicule autonome, comme un changement de voie, ou l'évitement d'un obstacle. La trajectoire de référence calculée par le module de planification 4 comprend notamment une vitesse de lacet de référence REF_YR à appliquer pour suivre la trajectoire de référence. Le module 4 transmet la vitesse de lacet de référence REF_YR au microprocesseur 6.

Le modèle d'estimation 5 calcule une valeur modélisée de la vitesse de lacet MOD_YR et de la vitesse latérale MOD_LAT_SPEED à partir des mesures de vitesse MES_SPEED et/ou MES_LAT_SPEED et de vitesse de lacet MES_YR fournies par le capteur de vitesse 1 et le gyroscope 2. La valeur modélisée de la vitesse de lacet MOD_YR et de la vitesse latérale MOD_LAT_SPEED sont ensuite transmises à l'unité de calcul 6 comprenant le microprocesseur 61.

Le microprocesseur 61 reçoit ainsi des données issues du module de planification 4 et du modèle d'estimation 5, concernant une première trajectoire du véhicule autonome 100 définie notamment par les données suivantes :
- une valeur modélisée de la vitesse de lacet MOD_YR du véhicule autonome 100,
- une valeur modélisée de la vitesse latérale MOD_LAT_SPEED du véhicule autonome 100, et
- une trajectoire de référence REF_TRAJ comprenant une vitesse de lacet de référence YR_REF.

Le microprocesseur 61 élabore une trajectoire de référence virtuelle VR_TRAJ et la transmet au module de contrôle du déplacement latéral 7. La trajectoire de référence virtuelle VR_TRAJ comprend notamment une vitesse de lacet de référence virtuelle VR_YR.

Dans la suite du document, la trajectoire de référence virtuelle VR_TRAJ est nommée « trajectoire virtuelle VR_TRAJ » et la une vitesse de lacet de référence virtuelle VR_YR est nommée « vitesse de lacet virtuelle VR_YR ».

Comme on le verra dans la suite du document, la trajectoire virtuelle VR_TRAJ est une trajectoire calculée à partir de la trajectoire de référence REF_TRAJ issue du module de planification 4. Ces deux trajectoires sont calculées selon des contraintes différentes : la trajectoire de référence REF_TRAJ issue du module de planification 4 optimise le confort des usagers du véhicule, alors que la trajectoire virtuelle VR_TRAJ optimise la vitesse d'exécution de la manœuvre de changement de voie.

Comme cela est plus spécifiquement décrit par la figure 4, pour calculer la trajectoire virtuelle VR_TRAJ, le microprocesseur 61 reçoit en outre
- un modèle CT_MOD du module de contrôle 7,
- une commande de direction STEER_CMD issue d'une première boucle de retour B1 provenant de la sortie du module de contrôle 7, et,
- une commande de direction appliquée APP_STEER_CMD issue d'une deuxième boucle de retour B2 provenant de la sortie du système de direction 8.

Le modèle CT_MOD du module de contrôle 7 est utilisé dans le traitement d'optimisation de la vitesse d'exécution de la manœuvre de changement de voie, notamment dans l'étape E2 du procédé de guidage selon l'invention.

La commande de direction STEER_CMD est déterminée par le module de contrôle 7 à partir de la trajectoire virtuelle VR_TRAJ issue du microprocesseur 6. La commande de direction STEER CMD comprend notamment un angle de rotation du volant du véhicule autonome 100.

La commande de direction STEER_CMD est ensuite transmise au système de direction 8. Le système de direction comprend avantageusement un système de direction assistée électrique EPS, qui transforme la commande de direction STEER_CMD en un mouvement, notamment un mouvement de rotation, d'un arbre de commande relié aux roues 9, par exemple par l'intermédiaire d'une crémaillère. Le mouvement de rotation de l'arbre de commande mis en œuvre par le système de direction assisté EPS est mesuré. On obtient ainsi une mesure APPL_STEER_CMD d'un angle de rotation du volant réellement appliqué en sortie du système de direction 8.

Dans la réalisation décrite, on assimile la commande de direction STEER_CMD à un angle de rotation d'un volant de direction, en particulier à un volant de direction virtuel. Dans la réalisation décrite, on assimile de même la mesure APPL_STEER_CMD à un angle de rotation au volant de direction, en particulier au volant de direction virtuel. En alternative, ces grandeurs pourraient être assimilées à un angle de braquage des roues de direction.

Dans un mode de réalisation préférentiel, le système de direction 8 limite la valeur absolue de la vitesse de lacet du véhicule automobile à une vitesse de lacet maximale MAX_YR_ABS.

De plus, dans ce mode de réalisation du système de direction 8, le taux de variation de la vitesse de lacet est compris entre une valeur minimale du taux de variation de la vitesse de lacet **MIN_SR** et une valeur maximale du taux de variation de la vitesse de lacet MAX_SR, le taux de variation de la vitesse de lacet variant selon un pas de réglage SR_STEP.

Dans la suite du document, les termes « taux de variation de la vitesse de lacet SEL_SR » ou « taux de variation sélectionné SEL_SR » ou « taux de variation SEL_SR » désignent, en valeur absolue, la modification maximale (en radians par seconde) que la vitesse de lacet peut subir lors d'une étape de modification. Comme on le verra dans la suite du document, le taux de variation SEL_SR évolue lors de la mise en œuvre de l'invention, ce qui signifie que la vitesse de lacet du véhicule augmente ou diminue plus ou moins rapidement lors du déroulement du procédé de guidage selon l'invention. A chaque itération du procédé de guidage, le taux de variation SEL_SR est recalculé afin de définir la modification maximale en valeur absolue que la vitesse de lacet peut subir lors de cette itération du procédé.

Dans un mode de réalisation, le microprocesseur 61 permet d'exécuter un logiciel comprenant les modules suivants qui communiquent entre eux:
- un module 610 d'activation du guidage,
- un module 611 de sélection d'un taux de variation de la vitesse de lacet, qui collabore avec le module de contrôle 7, et le système de direction 8,
- un module 612 de maximisation d'une vitesse de lacet de référence virtuelle, qui collabore avec le module de planification 4, le modèle d'estimation 5, et le module de contrôle 7,
- un module 613 de transmission de la vitesse de lacet de référence virtuelle, qui collabore avec le module de contrôle 7.

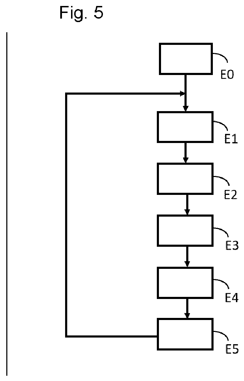

Un mode d'exécution du procédé de guidage est décrit ci-après en référence à la figure 5. Ce procédé peut être vu comme un procédé de fonctionnement d'un dispositif de guidage décrit précédemment ou comme un procédé de fonctionnement d'un véhicule décrit précédemment.

Le procédé comprend une itération sur cinq étapes successives, E1, E2, E3, E4 et E5. Ci-après on décrit la N^{ième} itération des étapes E1 à E5.

La première itération (N=1) est avantageusement précédée d'une étape E0 d'activation du guidage pour mettre en œuvre un changement de voie rapide selon l'invention.

Dans l'étape E0, on vérifie si au moins un critère d'activation d'un changement de voie rapide est vérifié.

Dans un mode de réalisation, l'activation d'un changement de voie rapide pourrait être transmise par un message issu d'un module de décision du véhicule autonome 100 (non décrit dans ce document).

Puis, suite à l'étape d'activation E0 on enchaine sur une première itération de l'étape E1.

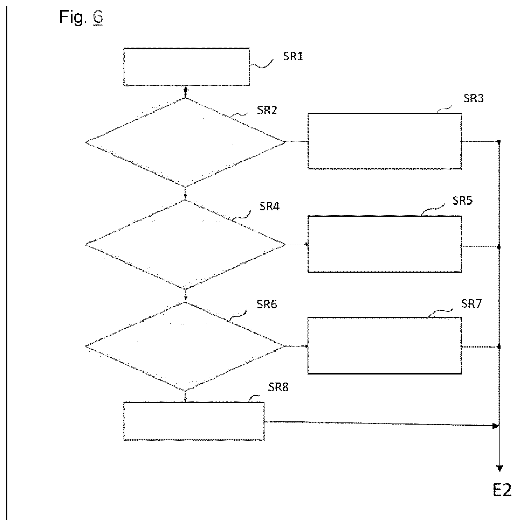

Dans la première étape E1, décrite en référence à la figure 6, on sélectionne un taux de variation de la vitesse de lacet SEL_SR_{N}.

Lors de la première itération du procédé (N=1), correspondant à l'étape SR1 illustrée par la figure 6, le taux de variation SEL_SR_{N} est fixé à la valeur minimale MIN_SR. On enregistre la valeur courante du taux de variation SEL_SR_{N} dans la mémoire 62, puis on enchaine sur la deuxième étape E2.

Lors des itérations suivantes du procédé (N>1), la première étape E1 comprend
- une première sous-étape de réception E11 d'une première commande de direction STEER_CMD_{N-1} émise par le module de contrôle de déplacement latéral 7 lors d'une précédente itération du procédé,
- une deuxième sous-étape de réception E12 d'une seconde commande de direction APP_STEER_CMD_{N-1} appliquée par le système de direction 8 issue de ladite précédente itération du procédé, et,
- une troisième sous-étape E13 de calcul du taux de variation de la vitesse de lacet SEL_SR_{N} en fonction d'un précédent taux de variation de la vitesse de lacet (SEL_SR_{N-1}) calculé lors de la précédente itération du procédé, de la valeur minimale du taux de variation de la vitesse de lacet MIN_SR, de la valeur maximale du taux de variation de la vitesse de lacet MAX_SR, du pas de réglage fixe SR_STEP et d'une différence entre la première et la seconde commandes de direction STEER_CMD_{N-1}, APP_STEER_CMD_{N-1}.

Dans un mode de réalisation, les commandes STEER_CMD et APP_STEER_CMD sont exprimées en degrés et correspondent à un angle de rotation du volant du véhicule autonome 100.

Après réception des première et seconde commandes de direction STEER_CMD_{N-1}, APP_STEER_CMD_{N-1} on enchaine ensuite sur la sous-étape E13 de calcul du taux de variation SEL_SR_{N} en fonction de la valeur minimale du taux de variation de la vitesse de lacet MIN_SR, de la valeur maximale du taux de variation de la vitesse de lacet MAX_SR, du pas fixe SR_STEP de variation du taux de variation de la vitesse de lacet et de l'écart entre les première et seconde commandes de direction STEER_CMD_{N-1}, APP_STEER_CMD_{N-1}.

La sous-étape E13 est décrite en référence au étapes SR2 à SR8 illustrées par la figure 6.

Dans l'étape SR2, on récupère la valeur courante du taux de variation de la vitesse de lacet, c'est-à-dire la valeur issue de la précédente itération SEL_SR_{N-1} dans la mémoire 62.

Puis on teste si les deux conditions suivantes sont vérifiées :
- la valeur absolue de la première commande STEER_CMD_{N-1} est strictement supérieure à la valeur absolue de la seconde commande APP_STEER_CMD_{N-1}, et
- le taux de variation de la vitesse de lacet SEL_SR_{N-1} est strictement supérieur à la valeur minimale du taux de variation de la vitesse de lacet MIN_SR.

Si ces deux conditions sont vérifiées alors on enchaine sur l'étape SR3, dans laquelle on met à jour la valeur du taux de variation de la vitesse de lacet en appliquant le calcul suivant : ${SEL_SR}_{N} = {SEL_SR}_{N - 1} - SR_STEP ,$ puis on enregistre la nouvelle valeur SEL_SR_{N} du taux de variation dans la mémoire 62 et on enchaine sur l'étape E2.

Sinon on enchaine sur l'étape SR4, dans laquelle on teste si les deux conditions suivantes sont vérifiées :
- la valeur absolue de la première commande STEER_CMD_{N-1} est strictement inférieure à la valeur absolue de la seconde commande APP_STEER_CMD_{N-1}, et
- le taux de variation de la vitesse de lacet SEL_SR_{N-1} est strictement supérieur à la valeur minimale du taux de variation de la vitesse de lacet **MIN_SR.**

Si ces deux conditions sont vérifiées alors on enchaine sur l'étape SR5, dans laquelle on met à jour la valeur du taux de variation de la vitesse de lacet en appliquant le calcul suivant :${SEL_SR}_{N} = {SEL_SR}_{N - 1} - SR_STEP ,$ puis on enregistre la nouvelle valeur SEL_SR_{N} du taux de variation dans la mémoire 62 et on enchaine sur l'étape E2.

Sinon on enchaine sur l'étape SR6, dans laquelle on teste si les deux conditions suivantes sont vérifiées :
- la valeur absolue de la première commande STEER_CMD_{N-1} est égale à la valeur absolue de la seconde commande APP_STEER_CMD_{N-1}, et
- le taux de variation de la vitesse de lacet SEL_SR_{N-1} est strictement inférieur à la valeur maximale du taux de variation de la vitesse de lacet MAX_SR.

Si ces deux conditions sont vérifiées alors on enchaine sur l'étape SR7, dans laquelle on met à jour la valeur du taux de variation de la vitesse de lacet en appliquant le calcul suivant :${SEL_SR}_{N} = {SEL_SR}_{N - 1} + SR_STEP ,$ puis on enregistre la nouvelle valeur SEL_SR_{N} du taux de variation dans la mémoire 62 et on enchaine sur l'étape E2.

Sinon on enchaine sur l'étape SR8, dans laquelle ne modifie pas la valeur du taux de variation de la vitesse de lacet. Autrement dit,:${SEL_SR}_{N} = {SEL_SR}_{N - 1}$ puis on enchaine sur l'étape E2.

En d'autres termes, l'algorithme de calcul du taux de variation de la vitesse de lacet SEL_SR_{N} comprend :
- une comparaison de la première commande de direction STEER_CMD_{N-1} et de la seconde commande de direction APP_STEER_CMD_{N-1} émises lors d'une précédente itération du procédé, et
- une comparaison du précédent taux de variation de la vitesse de lacet SEL_SR_{N-1} à la valeur minimale MIN_SR ou à la valeur maximale MAX_SR du taux de variation de la vitesse de lacet.

Si la première commande de direction STEER_CMD_{N-1} est différente de la seconde commande de direction APP_STEER_CMD_{N-1}, et si le précédent taux de variation de la vitesse de lacet SEL_SR_{N-1} est supérieur à la valeur minimale MIN_SR, alors le taux de variation de la vitesse de lacet SEL_SR_{N} est égal à la différence entre le précédent taux de variation de la vitesse de lacet SEL_SR_{N-1} et le pas de réglage fixe SR_STEP.

Sinon, si la première commande de direction STEER_CMD_{N-1} est égale à la seconde commande de direction APP_STEER_CMD_{N-1}, et si le précédent taux de variation de la vitesse de lacet SEL_SR_{N-1} est inférieur à la valeur maximale MAX_SR, alors le taux de variation de la vitesse de lacet SEL_SR_{N} est égal à la somme entre le précédent taux de variation de la vitesse de lacet SEL_SR_{N-1} et le pas de réglage fixe SR_STEP.

Sinon le taux de variation de la vitesse de lacet SEL_SR_{N} est égal au précédent taux de variation de la vitesse de lacet SEL_SR_{N-1}.

Ainsi, à chaque itération du procédé, dans la sous-étape E13 on vérifie si la précédente commande appliquée par le système de direction 8 est différente de celle qui été déterminée par le module de contrôle 7 lors de la précédente itération. Si tel est le cas, le taux de variation de la vitesse de lacet SEL_SR_{N} est diminué afin de ralentir la commande émise par le module de contrôle 7. Sinon, le taux de variation de la vitesse de lacet SEL_SR_{N} est augmenté afin de se rapprocher des capacités maximales MAX_SWC du système de direction 8. Les augmentations et diminutions du taux de variation de la vitesse de lacet SEL_SR_{N} s'effectuent par pas fixe SR_STEP à chaque itération, et en respectant les bornes minimales et maximales admissibles MIN_SR et MAX_SR.

Dans l'étape E2, on détermine une vitesse de lacet de référence virtuelle V_REF_YR_{N} en fonction du taux de variation de la vitesse de lacet SEL_SR_{N} et de la vitesse de lacet maximale MAX_YR_ABS définis dans la mémoire 62.

Dans le mode de réalisation décrit, la maximisation de la vitesse de lacet de référence virtuelle V_REF_YR_{N} repose sur un calcul d'optimisation dont l'objectif est de maximiser la vitesse de lacet de référence virtuelle V_REF_YR_{N} tout en respectant les limites du véhicule autonome 100, c'est-à-dire le modèle 5 d'estimation de la dynamique latérale du véhicule autonome 100 et les constantes du système de direction 8.

Le mode de réalisation décrit dans ce document repose sur une modélisation d'un véhicule de type Renault Zoé. Cet exemple est fourni à titre d'illustration et n'est pas limitatif.

L'expression mathématique du problème d'optimisation à résoudre dans ce mode de réalisation de l'invention est décrit ci-après en référence aux formules Math1 à Math8.

Les formules Math1 à Math4 définissent un premier modèle mathématique, représentant l'état du véhicule autonome 100.

La formule Math1 correspond aux équations d'état spatiales du véhicule autonome 100. $\begin{matrix}\dot{x} \left(t\right) = Ax \left(t\right) + Bu \left(t\right) \\ y \left(t\right) = Cx \left(t\right)\end{matrix}$ où
- A, B et C sont les matrices d'état spatiales définies par la formule Math4,
- u(t) est l'angle de rotation du volant défini par la formule Math3, et
- x(t) est le vecteur d'état du véhicule défini par la formule Math2.

La formule Math2 exprime le vecteur d'état *x(t)* du véhicule autonome 100. $x \left(t\right) = \left[\begin{matrix}{v}_{y} \\ \dot{ψ}\end{matrix}\right]$ où
- v_{y} est la vitesse latérale du véhicule autonome 100, aussi référencée par ailleurs dans le document « valeur modélisée de la vitesse latérale MOD_LAT_SPEED » ; elle est exprimée en mètres par seconde, et
- *ψ̇* est la vitesse de lacet du véhicule autonome 100, aussi référencée par ailleurs dans le document « valeur modélisée de la vitesse de lacet MOD_YR » ; elle exprimée en degrés par seconde.

La formule Math3 exprime l'angle de rotation u(t) du volant du véhicule autonome 100. $u \left(t\right) = δ$ où
- *δ* est l'angle de rotation du volant en degrés.

La formule Math4 exprime les matrices d'état A, B, C du véhicule autonome 100. $\begin{matrix}A = \left[\begin{matrix}- \frac{{C}_{f} + {C}_{r}}{{mv}_{x}} & - {v}_{x} + \frac{{C}_{r} {L}_{r} - {C}_{f} {L}_{f}}{{mv}_{x}} \\ \frac{- {L}_{f} {C}_{f} + {L}_{r} {C}_{r}}{{I}_{z} {v}_{x}} & \frac{{L}_{f}^{2} {C}_{f} + {L}_{r}^{2} {C}_{r}}{{I}_{z} {v}_{x}}\end{matrix}\right] \\ B = \left[\begin{matrix}\frac{{C}_{f}}{m} \\ \frac{{L}_{f} {C}_{f}}{{I}_{z}}\end{matrix}\right] \\ C = \left[0 1\right]\end{matrix}$ où
- vₓ est la vitesse longitudinale du véhicule autonome 100,
- C_{f} et Cᵣ sont exprimés en Newton par radian (N/rad) ; ces termes de dynamique du véhicule représentent une caractéristique de rigidité dans les virages, respectivement à l'avant et à l'arrière du véhicule,
- L_{f} et Lᵣ sont les distances exprimées en mètres (m) mesurées entre les roues respectivement avant et arrière, et le centre de gravité du véhicule autonome 100,
- m est la masse du véhicule exprimée en kilogrammes (kg),
- I_{z} est l'inertie du véhicule autour d'un axe vertical passant par le centre de gravité du véhicule, l'inertie étant exprimée en kilogrammes par secondes au carré (kg/s²)

La formule Math5 définit par ailleurs un deuxième modèle mathématique, correspondant à un modèle continu du module de contrôle de déplacement latéral 7. Dans l'étape E2, l'optimisation de la vitesse de lacet par le calcul d'une vitesse de lacet de référence virtuelle V_REF YR_{N} est résolue en interconnectant le premier et le deuxième modèle en boucle fermée. $\begin{matrix}{\dot{x}}_{c} \left(t\right) = {A}_{c} {x}_{c} \left(t\right) + {B}_{c} e \left(t\right) \\ δ \left(t\right) = {C}_{c} {x}_{c} \left(t\right) + {D}_{c} e \left(t\right)\end{matrix}$ où
- A_{c}, B_{c}, C_{c}, D_{c} sont les matrices d'état du module de contrôle de déplacement latéral 7,
- x_{c}(t) est le vecteur d'état du module de contrôle de déplacement latéral 7,
- e(t) est l'erreur de vitesse de lacet fournie en entrée du module de contrôle de déplacement latéral 7, c'est-à-dire la différence, lors d'un précédente itération du procédé, entre valeur modélisée de la vitesse de lacet MOD_YR issue du modèle 5 d'estimation de la dynamique latérale du véhicule et la vitesse de lacet de référence virtuelle V_REF_YR_{N-1} issue du microprocesseur 61, et
- *δ* est la sortie du module de contrôle de déplacement latéral 7, référencée par ailleurs dans ce document comme « la première commande de direction STEER_CMD_{N} ».

Le système d'état continu ainsi obtenu est discrétisé à une période de 0,01 seconde, qui correspond à la fréquence à laquelle le système de direction 8 peut traiter les commandes.

Le système en boucle fermée discrétisé ainsi obtenu vérifie les équations Math6 et Math7. $\begin{matrix}{x}_{cl} \left(k+1\right) = {A}_{cl} {x}_{cl} \left(k\right) + {B}_{cl} v \left(k\right) \\ {y}_{cl} \left(k\right) = {C}_{cl} {x}_{cl} \left(k\right) + {D}_{cl} v \left(k\right)\end{matrix}$ où
- x_{cl} est défini par l'expression mathématique Math7,
- A_{cl}, B_{cl}, C_{cl}, D_{cl} sont les matrices d'état du système en boucle fermée,
- v(k) est la vitesse de lacet de référence virtuelle V_REF_YR, et
- y_{cl} est la sortie du système en boucle fermée, c'est-à-dire la sortie du module de contrôle de déplacement latéral 7, autrement dit la commande de direction STEER_CMD. ${x}_{cl} = \left[\frac{x}{{x}_{c}}\right]$ où
- x est le vecteur d'état spatial du véhicule autonome 100, et
- x_{c} est le vecteur d'état du module de contrôle de déplacement latéral 7.

La variable v(k), aussi référencé par ailleurs dans le document « vitesse de lacet de référence virtuelle V_REF_YR », est définie en déterminant la plus grande valeur de K comprise entre 0 et 1 vérifiant l'expression mathématique Math8 pour tout entier i compris entre 1 et N, N étant l'horizon de prédiction. $\begin{matrix}max K \\ \begin{matrix}{x}_{cl} \left(k+1+i\right) = {A}_{cl} {x}_{cl} \left(k+i\right) + {B}_{cl} v \left(k\right) \\ {Ex}_{cl} \left(k+i\right) \leq D \\ v \left(k\right) = v \left(k-1\right) + K \left(r\left(k\right)-v\left(k-1\right)\right) \\ \left|v\left(k\right)-v\left(k-1\right)\right| \leq {D}_{v}\end{matrix}\end{matrix}$ où
- i est un index compris entre 1 et N,
- k est un indice de temps discret,
- r est vitesse de lacet de référence REF_YR,
- Dᵥ est le taux de variation de la vitesse de lacet, aussi référencé par ailleurs dans ce document « taux de variation de la vitesse de lacet SEL_SR_{N} ».

Ainsi, à l'issue du traitement d'optimisation, on obtient la vitesse de lacet de référence virtuelle V_REF_YR. On enchaine ensuite sur l'étape E3.

Dans l'étape E3, on transmet la vitesse de lacet de référence virtuelle V_REF_YR obtenue au module de contrôle de déplacement latéral 7, puis on enchaine sur l'étape E4.

Dans l'étape E4, le module de contrôle de déplacement latéral 7 génère une commande de direction STEER_CMD_{N} à partir de la vitesse de lacet de référence virtuelle V_REF_YR.

Dans un mode de réalisation, le module de contrôle de déplacement latéral 7 se compose d'un contrôleur rapide qui minimise l'erreur de vitesse de lacet e(k), qui est considérée comme une entrée de son système d'espace d'état discrétisé illustré dans la formule Math9. $\begin{matrix}{x}_{c} \left(k+1\right) = {A}_{c} {x}_{c} \left(k\right) + {B}_{c} e \left(k\right) \\ δ \left(k\right) = {C}_{C} {x}_{c} \left(k\right) + {D}_{c} e \left(k\right) \\ e \left(k\right) = v \left(k\right) - \dot{ψ} \left(k\right)\end{matrix}$ **où**
- x_{c} est le vecteur d'état du module de contrôle de déplacement latéral 7,
- A_{c}, B_{c}, C_{c}, D_{c} sont les matrices d'état du module de contrôle de déplacement latéral 7.

Ce mode de réalisation du module de contrôle latéral 7 correspond à un contrôleur classique permettant d'effectuer des manœuvres de direction automatisées. En sortie, le système de contrôle fournit, à chaque instant d'échantillonnage (par exemple tous les centièmes de seconde), une commande de direction STEER_CMD_{N}.

Le module de contrôle latéral 7 transmet la commande de direction STEER_CMD_{N} au système de direction 8, puis on enchaine sur l'étape E5.

Dans l'étape E5, le système de direction 8 comprend avantageusement un système de direction assistée électrique EPS, qui transforme la commande de direction STEER_CMD_{N} reçue du module de contrôle latéral 7 en un mouvement de rotation d'un arbre de commande relié aux roues 9. L'étape E5 comprend une mesure de la commande appliquée, APPL_STEER_CMD qui peut être une mesure d'un angle de rotation de l'arbre de commande.

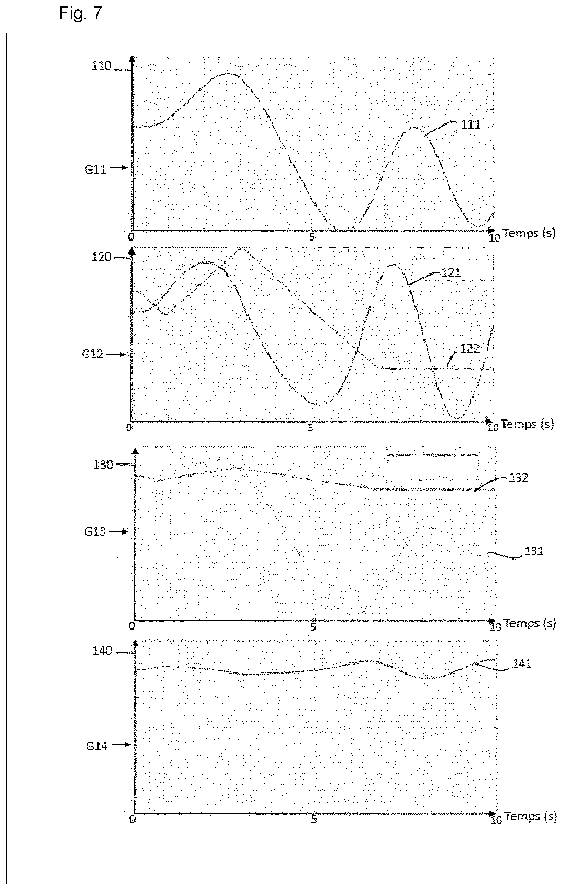

Les figures 7 à 9 illustrent la mise œuvre du procédé de guidage selon l'invention. Les données représentées sont issues de simulations mettant en œuvre un changement de voie automatisé le plus rapide possible effectué par un véhicule de type Renault Zoe automatisée.

Le véhicule autonome se déplace à une vitesse longitudinale de dix mètres par seconde sur une première voie de circulation et doit effectuer un changement de voie rapide vers une deuxième voie de circulation. Les trois simulations diffèrent les unes des autres selon plusieurs critères.

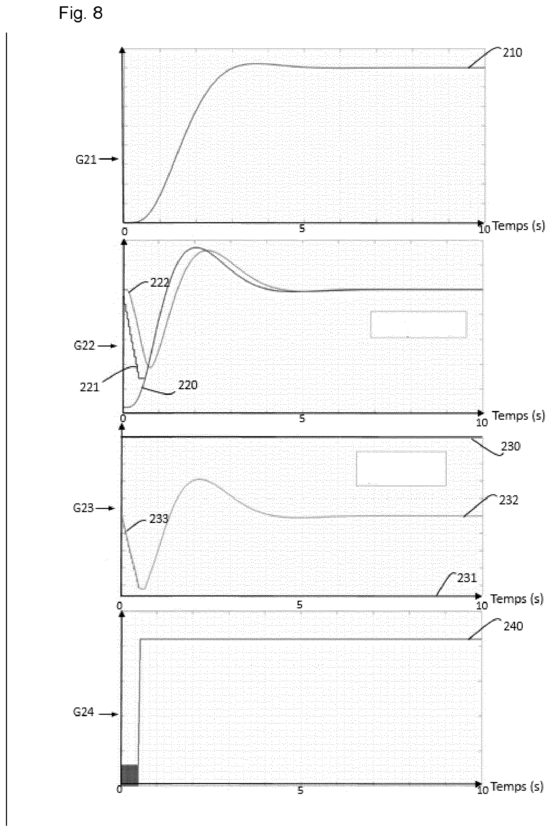

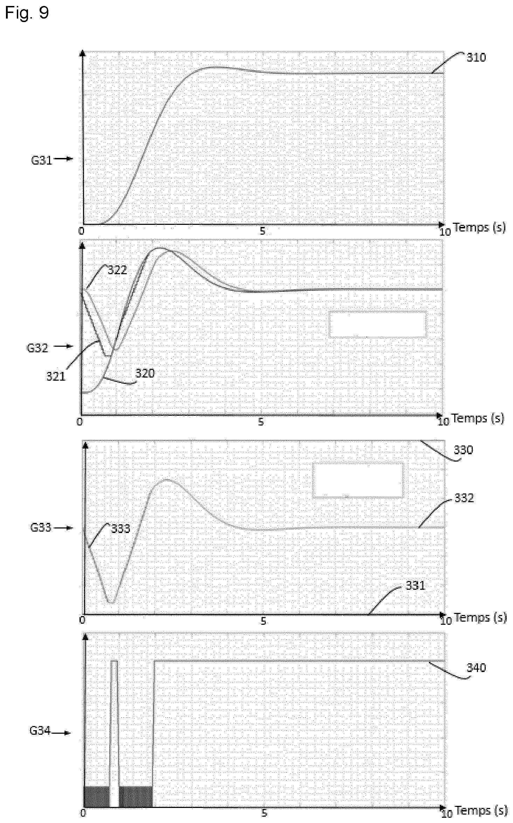

Un premier critère porte sur la présence de l'invention dans le véhicule autonome :
- dans la première simulation (figure 7), le véhicule autonome n'est pas équipé de l'invention,
- dans les deuxième et troisième simulations (figures 8 et 9) le véhicule autonome est équipé de l'invention.

Un deuxième critère porte sur la distance latérale entre la première et la deuxième voie :
- dans les deux premières simulations (figure 7 et figure 8), les lignes centrales des première et deuxième voies sont séparées par une distance latérale de 4 mètres,
- dans la troisième simulation, les lignes centrales des première et deuxième voies sont séparées par une distance latérale de 7 mètres.

Un troisième critère porte sur les capacités maximales de rotation du volant,
- dans la deuxième simulation (figure 8), les capacités maximales de rotation du volant sont de 100 degrés,
- tandis que dans la troisième simulation (figure 9) les capacités maximales de rotation du volant sont de 150 degrés.

La première simulation est décrite ci-après en référence à la figure 7. Elle porte sur un premier véhicule autonome non équipé de l'invention. Le premier véhicule effectue un changement de voie rapide entre une première et une deuxième voie de circulation séparées d'une distance latérale de 4 mètres. Le véhicule est équipé d'un contrôleur rapide. Le terme « contrôleur rapide » fait référence à un type de contrôleur utilisé pour des applications de suivi de voie.

Le graphe G11 décrit l'évolution temporelle du déplacement latéral en mètres (sur l'axe des ordonnées 110) du premier véhicule autonome. Comme cela est représenté par la courbe 111, le premier véhicule débute le changement de voie à une distance latérale de 4 mètres de la voie de référence, et ne parvient pas converger vers la deuxième voie située à une ordonnée 0. Au lieu de cela, le premier véhicule oscille autour de la deuxième la voie au début de la manœuvre, puis devient instable.

Le graphe G12 comprend deux courbes :
- la courbe 121 décrit l'évolution temporelle de la vitesse de lacet (exprimée en radians par seconde sur l'axe des ordonnées 120) du premier véhicule autonome,
- la courbe 122 décrit le vitesse de lacet de référence telle que définie par le module de planification.

Les courbes 121, 122 montrent que le premier véhicule n'est pas en mesure de respecter la consigne de vitesse de lacet de référence émise par le module de planification.

Les graphe G13 et G14 permettent de comprendre pourquoi le premier véhicule ne peut pas appliquer vitesse de lacet de référence émise par le module de planification.

En effet le graphe G13 illustre l'évolution temporelle de l'angle de rotation du volant (exprimé en degrés sur l'axe des ordonnées 130) :
- la courbe 131 représente l'évolution temporelle de la commande de direction issue du contrôleur rapide, et
- la courbe 132 représente l'évolution temporelle de la commande de direction appliquée par le premier véhicule, qui est beaucoup plus lente que l'évolution représentée par la courbe 131.

La bande passante du contrôleur génère une commande de direction rapide qui dépasse les capacités de direction du système de direction.

En outre, le graphe G14 illustre l'évolution temporelle du taux de variation de la vitesse de lacet de référence (exprimé en radians par seconde sur l'axe des ordonnées 141). La courbe 141 illustre une variation abrupte et discontinue en début de manœuvre (t=0s) du premier véhicule. Un contrôleur rapide ne peut mettre en œuvre une telle variation de la vitesse de lacet.

Les deuxième et troisième simulations illustrent l'effet du procédé de guidage selon l'invention. Avec la mise en œuvre de l'invention, le contrôleur a pu mettre en œuvre une vitesse de lacet de référence virtuelle maximisée tout en respectant les limites du système de direction du véhicule.

La deuxième simulation est décrite ci-après en référence à la figure 8. Elle porte sur un deuxième véhicule autonome équipé de l'invention. Le deuxième véhicule effectue la même manœuvre que le premier véhicule, c'est-à-dire un changement de voie rapide entre une première et une deuxième voie de circulation séparées d'une distance latérale de 4 mètres.

Le graphe G21 décrit l'évolution temporelle du déplacement latéral en mètres du deuxième véhicule autonome. Le deuxième véhicule débute le changement de voie à une distance latérale de 4 mètres de la voie de référence, et converge en trois secondes vers la deuxième voie située à une ordonnée 0. L'amplitude de l'oscillation initiale par rapport à l'ordonnée cible (0 mètre) est limitée à 0,2 mètres.

Le graphe G22 comprend trois courbes :
- la courbe 220 décrit l'évolution temporelle de la vitesse de lacet de référence telle que définie par le module de planification,
- la courbe 221 décrit l'évolution temporelle de la vitesse de lacet de référence virtuelle telle que définie par le procédé de guidage selon l'invention,
- la courbe 222 décrit l'évolution temporelle de la vitesse de lacet mise en œuvre par le deuxième véhicule autonome.

La proximité des courbes 221 et 222 montre que le deuxième véhicule parvient à appliquer la vitesse de lacet de référence virtuelle. En effet, on observe que
- entre t=0 seconde et t=0,6 seconde, la valeur absolue de la vitesse de lacet de référence virtuelle augmente progressivement, ce qui permet au deuxième véhicule d'appliquer la consigne de vitesse de lacet, alors que, à t=0 seconde, la vitesse de lacet de référence 220 issue du module de planification est très éloignée de la vitesse de lacet du mise en œuvre par le deuxième véhicule,
- la vitesse de lacet de référence virtuelle évolue progressivement pour rejoindre à t=0,6 seconde la courbe 222 représentant la vitesse de lacet de référence telle que définie par le module de planification,
- à t = 5 secondes, la vitesse de lacet du mise en œuvre par le deuxième véhicule converge vers la vitesse de lacet de référence telle que définie par le module de planification.

Le graphe G23 illustre l'évolution temporelle de l'angle de rotation du volant :
- la courbe 230 représente la limite inférieure de l'angle de rotation du volant du deuxième véhicule, soit -100 degrés,
- la courbe 231 représente la limite supérieure de l'angle de rotation du volant du deuxième véhicule, soit +100 degrés,
- la courbe 232 représente l'évolution temporelle de la commande de direction appliquée par le deuxième véhicule,
- la courbe 233 représente l'évolution temporelle de la commande de direction issue du contrôleur rapide.

La commande de direction générée par le contrôleur rapide respecte les capacités de direction du système de direction. La commande de direction appliquée 232 par le premier véhicule respecte donc la commande de direction 233 issue contrôleur.

En outre, le graphe G24 illustre l'évolution temporelle du taux de variation de la vitesse de lacet de référence virtuelle. La courbe 240 illustre une évolution progressive de la vitesse de lacet de référence virtuelle en début de manœuvre du deuxième véhicule, qui permet au contrôleur de suivre cette évolution.

La troisième simulation est décrite ci-après en référence à la figure 9. Elle porte sur un troisième véhicule autonome équipé de l'invention. Le troisième véhicule effectue une manœuvre générant une déviation latérale plus importante que les première et deuxième simulations, puisqu'il effectue un changement de voie rapide entre une première et une deuxième voie de circulation séparées d'une distance latérale de 7 mètres. Les limites inférieure et supérieure de l'angle de rotation du volant du troisième véhicule sont respectivement -150 degrés et +150 degrés.

Le graphe G31 décrit l'évolution temporelle du déplacement latéral en mètres du deuxième véhicule autonome. Le troisième véhicule débute le changement de voie à une distance latérale de 7 mètres de la voie de référence, et converge en cinq secondes vers la deuxième voie située à une ordonnée 0. L'amplitude de l'oscillation initiale par rapport à l'ordonnée cible (0 mètre) est limitée à 0,2 mètres.

Le graphe G32 comprend trois courbes :
- la courbe 320 décrit l'évolution temporelle de la vitesse de lacet de référence telle que définie par le module de planification,
- la courbe 321 décrit l'évolution temporelle de la vitesse de lacet de référence virtuelle telle que définie par le procédé de guidage selon l'invention,
- la courbe 322 décrit l'évolution temporelle de la vitesse de lacet mise en œuvre par le troisième véhicule autonome.

La proximité des courbes 321 et 322 montre que le deuxième véhicule parvient à se rapprocher de la vitesse de lacet de référence virtuelle. En effet, on observe que
- entre t=0 seconde et t=0,8 seconde, la valeur absolue de la vitesse de lacet de référence virtuelle augmente progressivement, ce qui permet au troisième véhicule d'appliquer la consigne de vitesse de lacet, alors que, à t=0 seconde, la vitesse de lacet de référence 320 issue du module de planification est très éloignée de la vitesse de lacet du mise en œuvre par le deuxième véhicule,
- la vitesse de lacet de référence virtuelle évolue progressivement pour rejoindre à t=0,8 seconde la courbe 322 représentant la vitesse de lacet de référence telle que définie par le module de planification,
- à t = 5 secondes, la vitesse de lacet mise en œuvre par le troisième véhicule converge vers la vitesse de lacet de référence telle que définie par le module de planification.

Le graphe G33 illustre l'évolution temporelle de l'angle de rotation du volant :
- la courbe 330 représente la limite inférieure de l'angle de rotation du volant du troisième véhicule, soit -150 degrés,
- la courbe 331 représente la limite supérieure de l'angle de rotation du volant du troisième véhicule, soit +150 degrés,
- la courbe 332 représente l'évolution temporelle de la commande de direction appliquée par le troisième véhicule,
- la courbe 333 représente l'évolution temporelle de la commande de direction issue du contrôleur rapide.

La commande de direction générée par le contrôleur rapide respecte les capacités de direction du système de direction. La commande de direction appliquée 332 par le premier véhicule respecte donc la commande de direction 333 issue contrôleur.

Les graphes G32 et G33 illustrent également l'effet de la modification progressive du taux de variation de la vitesse de lacet. La valeur absolue de la vitesse de lacet de référence virtuelle augmente jusqu'à atteindre un plateau vers t=0,65 seconde. Entre t=0,65 seconde et t=0,8 seconde la vitesse de lacet de référence virtuelle est constante, de même que l'angle de rotation du volant du troisième véhicule. Le véhicule a alors atteint les capacités maximales du système de direction.

En outre, le graphe G34 illustre l'évolution temporelle du taux de variation de la vitesse de lacet de référence virtuelle. La courbe 340 montre que le taux variation de la vitesse de lacet n'a été réduit que sur deux courtes périodes (chacune étant inférieure à une seconde) au début de la manœuvre.

Comme cela a été illustré par les trois simulations présentées, le procédé selon l'invention a été testé dans un simulateur développé par Renault, qui utilise les paramètres de conduite d'une Renault Zoe automatisée, permet d'évaluer de manière fiable les performances du système.

Les résultats obtenus lors des simulations montrent que le procédé de guidage selon l'invention apporte une solution à l'une des principales limitations des manœuvres automatisées du volant, qui est d'optimiser à la fois la dynamique du véhicule et les capacités maximales du volant en mode autonome, tout en respectant la sécurité de conduite.

En particulier, le procédé de guidage selon l'invention permet de gérer simultanément
- des manœuvres de changement rapide de voie, entre une première et une deuxième voie de circulation, notamment lorsque la distance latérale entre la première et la deuxième voie est importante,
- la limitation de la commande de direction maximale due au fonctionnement de la direction assistée électrique; et
- l'exploitation des capacités maximales de vitesse de rotation du volant.

Ainsi, le procédé de guidage selon l'invention permet au véhicule autonome d'effectuer une manœuvre de changement de voie rapide, en maintenant une trajectoire stable tout le long de la manœuvre.

## Revendications

1. Procédé de guidage d'un véhicule automobile (100) équipé d'un capteur de vitesse (1), d'un gyroscope (2), d'un moyen de géolocalisation (3), d'un système de planification de trajectoire (4), d'un module de contrôle de déplacement latéral (7), d'un système de direction (8) et de roues (9),
le système de direction (8) limitant une valeur absolue d'une vitesse de lacet du véhicule automobile à une vitesse de lacet maximale (MAX_YR_ABS), un taux de variation (SR) de la vitesse de lacet étant compris entre une valeur minimale (MIN_SR) et une valeur maximale (MAX_SR), le taux de variation de la vitesse de lacet (SR) variant selon un pas de réglage fixe (SR_STEP),
le procédé étant **caractérisé en ce qu'**il comprend une itération des étapes suivantes :
- une première étape (E1) de sélection d'un taux de variation de la vitesse de lacet (SEL_SR_{N}),
- une deuxième étape (E2) de maximisation d'une vitesse de lacet de référence virtuelle (V_REF_YR_{N}) en fonction du taux de variation de la vitesse de lacet (SEL_SR_{N}) et de la vitesse de lacet maximale (MAX_YR_ABS),
- une troisième étape (E3) de transmission de la vitesse de lacet de référence virtuelle (V_REF_YR_{N}) au module de contrôle de déplacement latéral (7).

2. Procédé de guidage selon la revendication précédente, **caractérisé en ce qu'**il comprend, suite à la troisième étape (E3),
- une quatrième étape (E4) de génération par le module de contrôle de déplacement latéral (7) d'une première commande de direction (STEER_CMD) à partir de la vitesse de lacet de référence virtuelle (V_REF_YR_{N}), et
- une cinquième étape (E5) de transformation par le système de direction (8) de la première commande de direction (STEER_CMD) en une seconde commande de direction (APP_STEER_CMD) consistant en un mouvement d'un arbre de direction relié aux roues directrices (9).

3. Procédé de guidage selon l'une des revendications précédentes, **caractérisé en ce que** la première étape (E1) comprend :
- une première sous-étape de réception (E11) d'une première commande de direction (STEER_CMD_{N-1}) émise par le module de contrôle de déplacement latéral (7) lors d'une précédente itération du procédé,
- une deuxième sous-étape de réception (E12) d'une seconde commande de direction (APP_STEER_CMD_{N-1}) appliquée par le système de direction (8) lors de ladite précédente itération du procédé, et
- une troisième sous-étape (E13) de calcul du taux de variation de la vitesse de lacet (SEL_SR_{N}) en fonction d'un précédent taux de variation de la vitesse de lacet (SEL_SR_{N-1}) calculé lors de la précédente itération du procédé, de la valeur minimale du taux de variation de la vitesse de lacet (MIN_SR), de la valeur maximale du taux de variation de la vitesse de lacet (MAX_SR), du pas de réglage fixe (SR_STEP) et d'une différence entre la première et la seconde commandes de direction (STEER_CMD_{N-1}, APP_STEER_CMD_{N-1}).

4. Procédé de guidage selon la revendication précédente, **caractérisé en ce que** la troisième sous-étape (E13) de calcul du taux de variation de la vitesse de lacet (SEL_SR_{N}) comprend :
- une comparaison de la première commande de direction (STEER_CMD_{N-1}) et de la seconde commande de direction (APP_STEER_CMD_{N-1}) émises lors d'une précédente itération du procédé, et
- une comparaison du précédent taux de variation de la vitesse de lacet (SEL_SR_{N-1}) à la valeur minimale (MIN_SR) du taux de variation de la vitesse de lacet,
et **en ce que** :
- si la première commande de direction (STEER_CMD_{N-1}) est différente de la seconde commande de direction (APP_STEER_CMD_{N-1}), et si le précédent taux de variation de la vitesse de lacet (SEL_SR_{N-1}) est supérieur à la valeur minimale (MIN_SR), alors le taux de variation de la vitesse de lacet (SEL_SR_{N}) est égal à la différence entre le précédent taux de variation de la vitesse de lacet (SEL_SR_{N-1}) et le pas de réglage fixe (SR_STEP), sinon
- si la première commande de direction (STEER_CMD_{N-1}) est égale à la seconde commande de direction (APP_STEER_CMD_{N-1}), et si le précédent taux de variation de la vitesse de lacet (SEL_SR_{N-1}) est inférieur à la valeur maximale (MAX_SR), alors le taux de variation de la vitesse de lacet (SEL_SR_{N}) est égal à la somme du précédent taux de variation de la vitesse de lacet (SEL_SR_{N-1}) et du pas de réglage fixe (SR_STEP), sinon
- le taux de variation de la vitesse de lacet (SEL_SR_{N}) est égal au précédent taux de variation de la vitesse de lacet (SEL_SR_{N-1}).

5. Procédé de guidage selon l'une des revendications précédentes, le système de direction (8) étant apte à traiter des commandes issues du module de contrôle de déplacement latéral (7) à une fréquence inférieure ou égale à une fréquence de traitement maximale (F_MAX), **caractérisé en ce que** l'étape (E2) de maximisation de la vitesse de lacet de référence virtuelle (V_REF_YR_{N}) comprend :
- une modélisation d'un système continu en boucle fermée (CL_S) comprenant un modèle d'état continu du véhicule automobile (100) et un modèle continu du module de contrôle de déplacement latéral (7),
- une définition d'un système discrétisé en boucle fermé (D_CL_S) par discrétisation du modèle du système continu en boucle fermée (CL_S) à une fréquence inférieure ou égale à la fréquence de traitement maximale (F_MAX),
- une détermination de la vitesse de lacet de référence virtuelle (V_REF_YR_{N}) par un calcul d'optimisation, notamment de maximisation de cette vitesse.

6. Dispositif (70) de guidage d'un véhicule automobile (100), le véhicule automobile étant équipé d'un capteur de vitesse (1), d'un gyroscope (2), d'un moyen de géolocalisation (3), d'un système de planification de trajectoire (4), d'un module de contrôle de déplacement latéral (7), d'un système de direction (8) et de roues directrices (9), le dispositif comprenant des éléments (1, 2, 3, 4, 5, 6, 7, 8, 9, 61, 62, 63, 610, 611, 612, 613) matériels et/ou logiciels mettant en œuvre le procédé selon l'une des revendications 1 à 5.

7. Produit programme d'ordinateur comprenant des instructions de code de programme enregistrées sur un support lisible par ordinateur pour mettre en œuvre les étapes du procédé selon l'une quelconque des revendications 1 à 5 lorsque ledit programme fonctionne sur un ordinateur.

8. Support d'enregistrement de données, lisible par un ordinateur, sur lequel est enregistré un programme d'ordinateur comprenant des instructions de code de programme de mise en œuvre du procédé selon l'une des revendications 1 à 5 ou selon la revendication 7.

## Patentansprüche

1. Verfahren zum Führen eines Kraftfahrzeugs (100), das mit einem Geschwindigkeitssensor (1), einem Gyroskop (2), einem Geolokalisierungsmittel (3), einem Trajektorienplanungssystem (4), einem Modul (7) zur Kontrolle einer seitlichen Verlagerung, einem Lenksystem (8) und Rädern (9) ausgestattet ist,
wobei das Lenksystem (8) einen absoluten Wert einer Giergeschwindigkeit des Kraftfahrzeugs auf eine maximale Giergeschwindigkeit (MAX_YR_ABS) begrenzt, wobei eine Änderungsrate (SR) der Giergeschwindigkeit zwischen einem Mindestwert (MIN_SR) und einem Höchstwert (MAX_SR) liegt, wobei sich die Änderungsrate der Giergeschwindigkeit (SR) gemäß einem festen Verstellschritt (SR_STEP) ändert,
wobei das Verfahren **dadurch gekennzeichnet ist, dass** es eine Iteration der folgenden Schritte umfasst:
- eines ersten Schritts (E1) des Auswählens einer Änderungsrate der Giergeschwindigkeit (SEL_SR_{N}),
- eines zweiten Schritts (E2) des Maximierens einer virtuellen Referenz-Giergeschwindigkeit (V_REF_YR_{N}) in Abhängigkeit von der Änderungsrate der Giergeschwindigkeit (SEL_SR_{N}) und von der maximalen Giergeschwindigkeit (MAX_YR_ABS),
- eines dritten Schritts (E3) des Übertragens der virtuellen Referenz-Giergeschwindigkeit (V_REF_YR_{N}) an das Modul (7) zur Kontrolle einer seitlichen Verlagerung.

2. Verfahren zum Führen nach dem vorhergehenden Anspruch, **dadurch gekennzeichnet, dass** es nach dem dritten Schritt (E3) Folgendes umfasst:
- einen vierten Schritt (E4) des Erzeugens, durch das Modul (7) zur Kontrolle der seitlichen Bewegung, eines ersten Lenkbefehls (STEER_CMD) ausgehend von der virtuellen Referenz-Giergeschwindigkeit (V_REF_YR_{N}), und
- einen fünften Schritt (E5) des Umwandelns, durch das Lenksystem (8), des ersten Lenkbefehls (STEER_CMD) in einen zweiten Lenkbefehl (APP_STEER_CMD), der in einer Bewegung einer mit den Lenkrädern (9) verbundenen Lenkwelle besteht.

3. Verfahren zum Führen nach einem der vorhergehenden Ansprüche, **dadurch gekennzeichnet, dass** der erste Schritt (E1) Folgendes umfasst:
- einen ersten Teilschritt des Empfangens (E11) eines ersten Lenkbefehls (STEER_CMD_{N-1}), der von dem Modul (7) zur Kontrolle einer seitlichen Verlagerung bei einer vorhergehenden Iteration des Verfahrens gesendet wird,
- einen zweiten Teilschritt des Empfangens (E12) eines zweiten Lenkbefehls (APP_STEER_CMD_{N-1}), der von dem Lenksystem (8) bei der vorhergehenden Iteration des Verfahrens angewandt wird, und
- einen dritten Teilschritt (E13) des Berechnens der Änderungsrate der Giergeschwindigkeit (SEL_SR_{N}) in Abhängigkeit von einer vorhergehenden Änderungsrate der Giergeschwindigkeit (SEL_SR_{N-1}), die bei der vorhergehenden Iteration des Verfahrens berechnet wurde, von dem Mindestwert der Änderungsrate der Giergeschwindigkeit (MIN_SR), von dem Höchstwert der Änderungsrate der Giergeschwindigkeit (MAX_SR), von dem festen Verstellschritt (SR_STEP) und von einer Differenz zwischen dem ersten und dem zweiten Lenkbefehl (STEER_CMD_{N-1}, APP_STEER_CMD_{N-1}).

4. Verfahren zum Führen nach dem vorhergehenden Anspruch, **dadurch gekennzeichnet, dass** der dritte Teilschritt (E13) des Berechnens der Änderungsrate der Giergeschwindigkeit (SEL_SR_{N}) Folgendes umfasst:
- ein Vergleichen des ersten Lenkbefehls (STEER_CMD_{N-1}) und des zweiten Lenkbefehls (APP_STEER_CMD_{N-1}), die bei einer vorhergehenden Iteration des Verfahrens gesendet wurden, und
- ein Vergleichen der vorhergehenden Änderungsrate der Giergeschwindigkeit (SEL_SR_{N-1}) mit dem Mindestwert (MIN_SR) der Änderungsrate der Giergeschwindigkeit, und dadurch, dass
- wenn der erste Lenkbefehl (STEER_CMD_{N-1}) von dem zweiten Lenkbefehl (APP_STEER_CMD_{N-1}) verschieden ist und wenn die vorhergehende Änderungsrate der Giergeschwindigkeit (SEL_SR_{N-1}) größer als der Mindestwert (MIN_SR) ist, die Änderungsrate der Giergeschwindigkeit (SEL_SRN) gleich der Differenz zwischen der vorhergehenden Änderungsrate der Giergeschwindigkeit (SEL_SR_{N-1}) und dem festen Verstellschritt (SR_STEP) ist, ansonsten
- wenn der erste Lenkbefehl (STEER_CMD_{N-1}) gleich dem zweiten Lenkbefehl (APP_STEER_CMD_{N-1}) ist und wenn die vorhergehende Änderungsrate der Giergeschwindigkeit (SEL_SR_{N-1}) kleiner als der Höchstwert (MAX_SR) ist, die Änderungsrate der Giergeschwindigkeit (SEL_SR_{N}) gleich der Summe aus der vorhergehenden Änderungsrate der Giergeschwindigkeit (SEL_SR_{N-1}) und dem festen Verstellschritt (SR_STEP) ist, ansonsten
- die Änderungsrate der Giergeschwindigkeit (SEL_SR_{N}) gleich der vorhergehenden Änderungsrate der Giergeschwindigkeit (SEL_SR_{N-1}).

5. Verfahren zum Führen nach einem der vorhergehenden Ansprüche, wobei das Lenksystem (8) in der Lage ist, Befehle, die aus dem Modul zur Kontrolle einer seitlichen Bewegung (7) hervorgehen, mit einer Frequenz kleiner oder gleich einer maximalen Verarbeitungsfrequenz (F_MAX) zu verarbeiten, **dadurch gekennzeichnet, dass** der Schritt (E2) des Maximierens der virtuellen Referenz-Giergeschwindigkeit (V_REF_YR_{N}) Folgendes umfasst:
- ein Modellieren eines kontinuierlichen geschlossenen Regelkreises (CL_S), umfassend ein kontinuierliches Zustandsmodell des Kraftfahrzeugs (100) und ein kontinuierliches Modell des Moduls zur Kontrolle einer seitlichen Verlagerung (7),
- ein Definieren eines diskretisierten geschlossenen Regelkreises (D_CL_S) durch Diskretisieren des Modells des kontinuierlichen geschlossenen Regelkreises (CL_S) mit einer Frequenz kleiner oder gleich der maximalen Verarbeitungsfrequenz (F_MAX),
- ein Bestimmen der virtuellen Referenz-Giergeschwindigkeit (V_REF_YR_{N}) durch eine Optimierungsberechnung, insbesondere zur Maximierung dieser Geschwindigkeit.

6. Vorrichtung (70) zum Führen eines Kraftfahrzeugs (100), wobei das Kraftfahrzeug mit einem Geschwindigkeitssensor (1), einem Gyroskop (2), einem Geolokalisierungsmittel (3), einem Trajektorienplanungssystem (4) und einem Modul zur Kontrolle einer seitlichen Bewegung (7), einem Lenksystem (8) und Lenkrädern (9) ausgestattet ist, wobei die Vorrichtung Hardware- und/oder Softwareelemente (1, 2, 3, 4, 5, 6, 7, 8, 9, 61, 62, 63, 610, 611, 612, 613) umfasst, die das Verfahren nach einem der Ansprüche 1 bis 5 durchführen.

7. Computerprogrammprodukt, das Programmcodeanweisungen umfasst, die auf einem computerlesbaren Medium gespeichert sind, um die Schritte des Verfahrens nach einem der Ansprüche 1 bis 5 durchzuführen, wenn das Programm auf einem Computer läuft.

8. Computerlesbares Datenspeichermedium, auf dem ein Computerprogramm gespeichert ist, das Programmcodeanweisungen zur Durchführung des Verfahrens nach einem der Ansprüche 1 bis 5 oder nach Anspruch 7 umfasst.

## Claims

1. Method for guiding a motor vehicle (100) equipped with a velocity sensor (1), with a gyroscope (2), with a geolocating means (3), with a path-planning system (4), with a module (7) for controlling lateral movement, with a steering system (8) and with wheels (9),
the steering system (8) limiting an absolute value of a yaw rate of the motor vehicle to a maximum yaw rate (MAX_YR_ABS), a rate of change (SR) in the yaw rate being between a minimum value (MIN_SR) and a maximum value (MAX_SR), the rate of change (SR) in yaw rate being incremented by a set adjustment increment (SR_STEP), the method being **characterized in that** it comprises iteration of the following steps:
- a first step (E1) of selecting a rate of change in yaw rate (SEL_SR_{N}),
- a second step (E2) of maximizing a virtual reference yaw rate (V_REF_YR_{N}) depending on the rate of change in yaw rate (SEL_SR_{N}) and on the maximum yaw rate (MAX_YR_ABS),
- a third step (E3) of transmitting the virtual reference yaw rate (V_REF_YR_{N}) to the module (7) for controlling lateral movement.

2. Guiding method according to the preceding claim, **characterized in that** it comprises, following the third step (E3),
- a fourth step (E4) of generating, by means of the module (7) for controlling lateral movement, a first steering command (STEER_CMD) from the virtual reference yaw rate (V_REF_YR_{N}), and
- a fifth step (E5) of converting, by means of the steering system (8), the first steering command (STEER_CMD) into a second steering command (APP_STEER_CMD) consisting of a movement of a steering shaft connected to the steered wheels (9).

3. Guiding method according to one of the preceding claims, **characterized in that** the first step (E1) comprises:
- a first sub-step of receiving (E11) a first steering command (STEER_CMD_{N-1}) sent by the module (7) for controlling lateral movement in a previous iteration of the method,
- a second sub-step of receiving (E12) a second steering command (APP_STEER_CMD_{N-1}) applied by the steering system (8) in said previous iteration of the method, and
- a third sub-step (E13) of computing the rate of change in yaw rate (SEL_SR_{N}) depending on a previous rate of change in yaw rate (SEL_SR_{N-1}) computed in the previous iteration of the method, on the minimum value of the rate of change in yaw rate (MIN_SR), on the maximum value of the rate of change in yaw rate (MAX_SR), on the set adjustment increment (SR_STEP), and on a difference between the first and second steering commands (STEER_CMD_{N-1}, APP_STEER_CMD_{N-1}).

4. Guiding method according to the preceding claim, **characterized in that** the third sub-step (E13) of computing the rate of change in yaw rate (SEL_SR_{N}) comprises:
- comparing the first steering command (STEER_CMD_{N-1}) and the second steering command (APP_STEER_CMD_{N-1}) sent in a previous iteration of the method, and
- comparing the previous rate of change in yaw rate (SEL_SR_{N-1}) to the minimum value (MIN_SR) of the rate of change in yaw rate,
and **in that**:
- if the first steering command (STEER_CMD_{N-1}) is different from the second steering command (APP_STEER_CMD_{N-1}), and if the previous rate of change in yaw rate (SEL_SR_{N-1}) is greater than the minimum value (MIN_SR), then the rate of change in yaw rate (SEL_SR_{N}) is equal to the difference between the previous rate of change in yaw rate (SEL_SR_{N-1}) and the set adjustment increment (SR_STEP), otherwise
- if the first steering command (STEER_CMD_{N-1}) is equal to the second steering command (APP_STEER_CMD_{N-1}), and if the previous rate of change in yaw rate (SEL_SR_{N-1}) is less than the maximum value (MAX_SR), then the rate of change in yaw rate (SEL_SR_{N}) is equal to the sum of the previous rate of change in yaw rate (SEL_SR_{N-1}) and of the set adjustment increment (SR_STEP), otherwise
- the rate of change in yaw rate (SEL_SR_{N}) is equal to the previous rate of change in yaw rate (SEL_SR_{N-1}).

5. Guiding method according to one of the preceding claims, the steering system (8) being capable of processing commands delivered by the module (7) for controlling lateral movement at a frequency less than or equal to a maximum processing frequency (F_MAX), **characterized in that** the step (E2) of maximizing the virtual reference yaw rate (V_REF_YR_{N}) comprises:
- modelling a continuous closed-loop system (CL_S) comprising a continuous state model of the motor vehicle (100) and a continuous model of the module (7) for controlling lateral movement,
- defining a discretized closed-loop system (D_CL_S) by discretizing the model of the continuous closed-loop system (CL_S) at a frequency less than or equal to the maximum processing frequency (F_MAX),
- determining the virtual reference yaw rate (V_REF_YR_{N}) by means of an optimization calculation, in particular for maximizing this rate.

6. Device (70) for guiding a motor vehicle (100), the motor vehicle being equipped with a velocity sensor (1), with a gyroscope (2), with a geolocating means (3), with a path-planning system (4), with a module (7) for controlling lateral movement, with a steering system (8) and with steered wheels (9), the device comprising hardware and/or software components (1, 2, 3, 4, 5, 6, 7, 8, 9, 61, 62, 63, 610, 611, 612, 613) implementing the method according to one of Claims 1 to 5.

7. Computer program product comprising program code instructions recorded on a computer-readable medium so as to implement the steps of the method according to any one of Claims 1 to 5 when said program is run on a computer.

8. Computer-readable data-recording medium on which is recorded a computer program comprising program code instructions for implementing the method according to one of Claims 1 to 5 or according to Claim 7.
